# EUROPÄISCHE PATENTSCHRIFT

(11) **EP 0 801 610 B1**
(45) Veröffentlichungstag und Bekanntmachung des Hinweises auf die Patenterteilung: **28.04.1999**
(21) Anmeldenummer: 95942028.2
(22) Anmeldetag: 21.12.1995
(51) Int. Cl.: B60R 21/00

(54) **SICHERHEITSEINRICHTUNG FÜR FAHRZEUGINSASSEN**
SAFETY DEVICE FOR PROTECTING VEHICLE OCCUPANTS
DISPOSITIF DE SECURITE POUR LES OCCUPANTS D'UN VEHICULE

(30) Priorität: 11.01.1995 DE 19500582
(43) Veröffentlichungstag der Anmeldung: 22.10.1997
(73) Patentinhaber: ROBERT BOSCH GMBH, 70442 Stuttgart (DE)
(72) Erfinder: MATTES, Bernhard, D-74343 Sachsenheim (DE); MALICKI, Siegfried, D-74379 Ingersheim (DE); SCHUMACHER, Hartmut, D-71691 Freiberg (DE)
(86) Internationale Anmeldenummer: DE9501828
(87) Internationale Veröffentlichungsnummer: WO9621584

(56) Entgegenhaltungen:
- EP-A- 0 502 608
- WO-A-90/02062
- WO-A-95/11819
- GB-A- 2 046 540
- US-A- 5 343 394

## Beschreibung

### Stand der Technik

Die Erfindung betrifft ein elektronisches Gerät, insbesondere Sicherheitseinrichtung für Fahrzeuginsassen, nach dem Oberbegriff des Anspruchs 1. Eine elektronische Sicherheitseinrichtung für Fahrzeuginsassen ist beispielsweise aus dem Zeitschriftenartikel 1141 Ingenieurs de l'Automobile (1982) No. 6, Seiten 69-77 bekannt. Bei herkömmlichen Sicherheitseinrichtungen dieser Art erfolgt eine Auslösung von Sicherungsmitteln für Fahrzeuginsassen, Nie beispielsweise Airbag und/oder Gurtstraffer oder dergleichen durch Aktivierung einer sogenannten Zündpille in der Endstufe einer elektronischen Schaltungsanordnung. Die Aktivierung der im wesentlichen als Widerstandsdraht ausgebildeten Zündpille wird vermittels eines Stromflusses bewirkt, der aus der Fahrzeugbatterie selbst oder aus einem, als Reserverenergiequelle vorgesehenen Kondensator stammt. Nach Maßgabe eines auf eine Unfallsituation hindeutenden Sensorsignals eines beschleunigungsempfindlichen Sensors wird der gesamte, für die Aktivierung der Zündpille notwendige Strom der Zündpille schlagartig zugeleitet. Eine Unterbrechung des Zündvorgangs ist in der Regel nicht vorgesehen und nicht möglich.

In jüngster Zeit wurden von der Anmelderin, beziehungsweise von ihrer Beteiligungsgesellschaft, Airbag Systems Company Ltd., besonders intelligente Sicherheitseinrichtungen für Fahrzeuginsassen entwickelt, bei denen die für die Aktivierung des Zündelements oder der Zündpille notwendige Energiemenge dem Zündelement nicht schlagartig auf einmal sondern gleichsam paketweise in einer größeren Anzahl von Stromimpulsen zeitlich gestaffelt zugeführt wird. Diese gattungsbildenden Sicherheitseinrichtungen sind aus WO-A-90/02062 und US-A-5 343 394 bekannt. Dieses, in der Fachwelt als sogenannte Wechselstromzündung bekannte Prinzip, ermöglicht eine besonders feinfühlig dosierte Zündung des Zündelements, wobei selbst nach Einleitung des Zündvorgangs noch in den Zündvorgang eingegriffen una dieser beeinflußt werden kann. Selbst ein Abbruch eines bereits eingeleiteten Zündvorgangs ist noch möglich, wenn beispielsweise aufgrund aktueller Meßwerte des beschleunigungsempfindlichen Sensors festgestellt wird, daß ein zunächst als besonders kritisch bewertetes Beschleunigungssignal doch nicht auf eine kritische Unfallsituation zurückzuführen ist.

Aus GB-A-2 046 540 ist weiterhin ein elektrischer Heizkreis für Heizkissen, Haartrockner oder dergleichen bekannt, bei dem der Strom dem Verbraucher impulsförmig zugeführt wird. Vorteile der Erfindung

Die erfindungsgemäße Lösung gemäß den Merkmalen des Anspruchs 1 ermöglicht die Realisierung eines besonders einfach ausgestalteten elektronischen Geräts unter Ausnutzung des von der Anmelderin entwickelten neuartigen Wechselstromzündungsprinzips. Die Erfindung geht dabei von der Erkenntnis aus, daß eine Wechselstromzündung auf einfache Weise auch dadurch realisierbar ist, daß ein die Zündelemente der diversen Sicherungsmittel für Fahrzeuginsassen ansteuernder Signalgenerator vorgesehen ist, der seinerseits von einem einfachen mechanischen Beschleunigungsschalter steuerbar ist. Für die Ansteuerung des Signalgenerators läßt sich ein besonders preiswerter mechanischer Beschleunigungsschalter einsetzen, der nur einen vergleichsweise geringen Versorgungsstrom für die Ansteuerelektronik des Signalgenerators steuern muß. Der Strom für die Zündelemente selbst muß nämlich nicht über diesen mechanischen Beschleunigungsschalter geleitet werden. Das elektronische Gerät zeichnet sich demzufolge durch einen sehr einfachen Aufbau und vergleichsweise geringe Kosten aus. Es ist dadurch möglich, ohne große Kostensteigerung gegebenenfalls mehrere derartige elektronische Geräte in einem Fahrzeug einzusetzen. Dies ist besonders zweckmäßig, da heute schon für die Serienherstellung vorgesehene Fahrzeuge über eine größere Anzahl von Sicherheitseinrichtungen für Fahrzeuginsassen und demzufolge diesen zugeordnete Endstufen verfügen. Darüber hinaus verfügt das elektronische Gerät selbstverständlich über die mit der Wechselstromzündung grundsätzlich verbundenen Vorteile. So ist, insbesondere im Vergleich mit herkömmlichen Sicherheitseinrichtungen, eine wesentliche Erhöhung der Sicherheit gegen unerwünschte Fehlauslösungen gegeben. Auch Kurzschlüsse der Zündleitungen nach dem Plus- oder Minus-Anschluß der Versorgungsspannung erzeugen keine Fehlauslösung. Weiterhin sind keine Kurzschlußbrücken in den Zündkreissteckern zur Unterdrückung von Spannungseinkopplungen und eines unerwünschten Stromflusses über die Zündpillen nötig. Auch führen Fehler im Kabelbaum des Fahrzeugs nicht zu Fehlauslösungen der Sicherheitseinrichtungen.

### Zeichnung

Ein Ausführungsbeispiel der Erfindung ist in der Zeichnung dargestellt und in der nachfolgenden Beschreibung näher erläutert. Die Figur 1 zeigt dabei als Blockschaltbild bzw. Stromlaufplan ein erstes Ausführungsbeispiel des elektronischen Geräts, einschließlich des beschleunigungsempfindlichen Sensors, beginnend vom Batterieanschluß bis hin zu den Verbindungsleitungen, die von der Endstufe zu den in der Zeichnung nicht mehr dargestellten Sicherungsmitteln führen, Figur 2 zeigt ein Impulsbild der an einem Zündelement anstehenden Spannung und Figur 3 ein zweites Ausführungsbeispiel des elektronischen Gerätes.

### Beschreibung der Ausführungsbeispiele

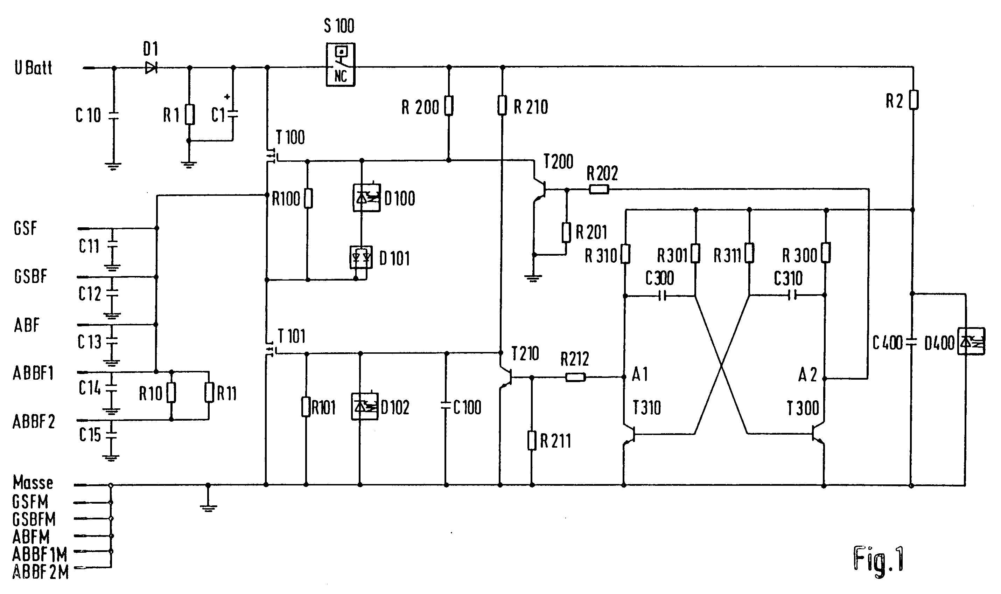

Figur 1 zeigt das Blockschaltbild bzw. den Stromlaufplan eines ersten Ausführungsbeispiels des erfindungsgemäßen elektronischen Geräts. Das Gerät ist mit dem Masseanschluß des Fahrzeugs und am Anschluß UBatt mit dem positiven Pol der Fahrzeugbatterie verbindbar. Zwischen dem Anschluß UBatt und dem Masseanschluß ist ein Kondensator C10 geschaltet. Weiterhin liegt an dem Anschluß UBatt die Anode einer in Flußrichtung gepolten Diode D1, deren Kathodenanschluß mit dem ersten Anschluß eines Widerstands R1 verbunden ist, dessen zweiter Anschluß an Masse liegt. Mit dem Kathodenanschluß der Diode D1 ist ein Kondensator C1 verbunden, dessen zweiter Anschluß ebenfalls an Masse liegt. Ebenfalls mit dem Kathodenanschluß der Diode D1 ist ein erster Anschluß eines Beschleunigungssensors S100 verbunden, dessen anderer Anschluß mit einem Widerstand R2 verbunden ist, dessen zweiter Anschluß mit einem Kondensator C400 verbunden ist, dessen zweiter Anschluß an Masse liegt. Bei dem Sensor S100 handelt es sich vorzugsweise um einen mechanischen Beschleungigungssensor, der vorzugsweise als sogenannter Reed-Schalter ausgestaltet ist. Elektrisch gesehen stellt er praktisch einen Arbeitskontakt dar, der unter Beschleunigungseinwirkung, insbesondere nach Erreichen einer vorgebbaren Beschleunigungsschwelle, betätigt wird und dadurch einen Stromkreis schließt. Als Beschleunigungsschwelle kann zweckmäßig ein Wert der Beschleunigung zwischen etwa 4 und 6 g, insbesondere ein Wert von ungefähr 5,6 g vorgegeben werden. g bedeutet dabei die Erdbeschleunigung. Der Widerstand R1 und der Kondensator C1 bilden eine sogenannte Energiereserve. Dabei ist der Kondensator C1 über die Diode D1 über den Anschluß UBatt von der Fahrzeugbatterie aufladbar. Derartige Energiereserven werden bei Sicherheitseinrichtungen dieser Art insbesondere deshalb vorgesehen, weil die vergleichsweise schwere Fahrzeugbatterie bei einem Unfall leicht von ihren Verbindungsanschlüssen abreißt, so daß eine Stromversorgung von der Fahrzeugbatterie nicht mehr möglich ist. Das elektronische Gerät soll dann noch für eine vorgebbare Zeitdauer aus der Energiereserve mit Strom versorgt werden. Als Kondensator C1 wird zweckmäßig ein Elektrolytkondensator größeren Kapazitätswertes, der beispielsweise einige 1000 Mikrofarad Kapazität hat, eingesetzt. Parallel zu dem Kondensator C400 ist eine Diode D400, in Sperrichtung gepolt, geschaltet. Der Widerstand R und die Diode D400 dienen der Stabilisierung der Versorgungsspannung des elektronischen Geräts. Zweckmäßig wird als Diode D400 eine Zenerdiode mit einem entsprechenden Spannungswert eingesetzt. Das elektronische Gerät weist weiterhin eine astabile Kippstufe als Signalgenerator auf, die von folgenden Bauelementen gebildet wird: Kondensatoren C300, C310; Widerstände R300, R301, R 310 und R311; Schaltelemente T300 und T310. Als Schaltelemente T300, T310 werden zweckmäßig Halbleiterschaltelemente, insbesondere bipolare Transistoren, eingesetzt. Die Ausgangsanschlüsse der astabilen Kippstufe, also jeweils die Verbindungspunkte des Widerstands R310 mit dem Kondensator C300 bzw. des Widerstands R300 mit dem Kondensator C310 sind mit je einer Puffer- bzw. Entkoppelstufe verbunden. Die erste Entkoppelstufe besteht aus dem Widerstand R200, dem Schaltelement T200, sowie den Widerständen R202 und R 201. Dabei ist ein Anschluß des Widerstandes R202 mit dem Verbindungspunkt des Widerstandes R300 und dem Kondensator C310 verbunden. Der andere Anschluß des Widerstandes R202 ist einerseits mit einem Anschluß des Widerstandes R201 verbunden, dessen anderer Anschluß an Masse gelegt ist. Andererseits ist dieser Anschluß des Widerstandes R202 mit der Steuerelektrode des Schaltelements T200 verbunden. Als Schaltelement ist auch hier ein Halbleiterschaltelement, insbesondere ein bipolarer Transistor vorgesehen. Der Emitteranschluß dieses Schaltelements T200 ist an Masse gelegt, während der Kollektoranschluß des Schaltelements T200 mit einem Anschluß des Widerstandes R200 verbunden ist, dessen anderer Anschluß an den Ausgangsanschluß des Sensors 100 gelegt ist. Die zweite Entkoppelstufe besteht aus dem Widerstand R210, dem Schaltelement T210, sowie den Widerständen R211 und R212. Dabei ist ein Anschluß des Widerstandes R212 mit dem Verbindungspunkt zwischen den Widerständen R310 und dem Kondensator C300 verbunden. Der andere Anschluß des Widerstandes R212 ist mit einem Anschluß des Widerstandes R211 verbunden, dessen zweiter Anschluß an Masse liegt. Weiterhin ist dieser zweite Anschluß des Widerstands R212 mit der Steuerelektrode des Schaltelements T210 verbunden. Auch dieses Schaltelement ist ebenso wie das Schaltelement T200 ein Halbleiterschaltelement, insbesondere ein bipolarer Transistor, dessen Emitteranschluß ebenfalls an Masse liegt. Der Kollektoranschluß des Schaltelements T210 ist über den Widerstand R210 mit dem Ausgangsanschluß des Sensors S100 verbunden. Die Kollektoranschlüsse der Schaltelemente T200 und T210 sind an Steuerelektroden von Endstufenschaltelementen T100 bzw. T101 geführt. Ein Ausgangsanschluß des Schaltelements T100 ist mit dem Kathodenanschluß der Diode D1 verbunden, während ein Ausgangsanschluß des Schaltelements T101 mit dem Massenanschluß verbunden ist. Je ein Ausgangsanschluß der Schaltelemente T100 und T101 ist miteinander verbunden und an Ausgangsanschlüsse GSF, GSBF, ABF, ABBF1 und ABBF2 geführt. Diese Abkürzungen haben folgende Bedeutung:

GSF bedeutet Gurtstraffer Fahrer. Von diesem Ausgangsanschluß führt also eine Verbindungsleitung zu dem Zündelement, das den für den Fahrer des Fahrzeugs vorgesehenen Gurtstraffer auslöst. Die Abkürzung GSBF bedeutet Gurtstraffer Beifahrer. Dieser Ausgangsanschluß wird also mit dem Zündelement verbunden, das für die Auslösung des Gurtstraffers für den Beifahrer zuständig ist. Die Abkürzung ABF heißt Airbag Fahrer und bedeutet demzufolge, daß dieser Ausgangsanschluß mit dem Zündelement verbunden ist, das den für den Fahrer vorgesehenen Airbag auslöst. Die Abkürzung ABBF1 bedeutet Airbag Beifahrer 1. Das heißt also, daß dieser Ausgangsanschluß mit dem Zündelement verbunden wird, das für die Auslösung des für den Beifahrer 1 vorgesehenen Airbags zuständig ist. Schließlich bedeutet die Abkürzung ABBF2 Airbag für Beifahrer 2. Dieser Ausgangsanschluß wird demzufolge mit dem Zündelement verbunden, das für die Auslösung des für einen zweiten Beifahrer vorgesehenen Airbag zuständig ist. Bei den vorgenannten Zündelementen handelt es sich um die im Zusammenhang mit der von der Anmelderin entwickelten Wechselstromzündungstechnik vorgesehenen Zündelementen, die aus einer Reihenschaltung eines Kondensator mit relativ kleinem Kapazitätswert und einer Zündpille bestehen. Der jeweils andere Pol der Zündelemente wird mit dem Masseanschluß verbunden. Dies geht auch aus den entsprechenden Anschlußbezeichnungen an dem Masseanschluß im linken unteren Teil der Figur hervor.

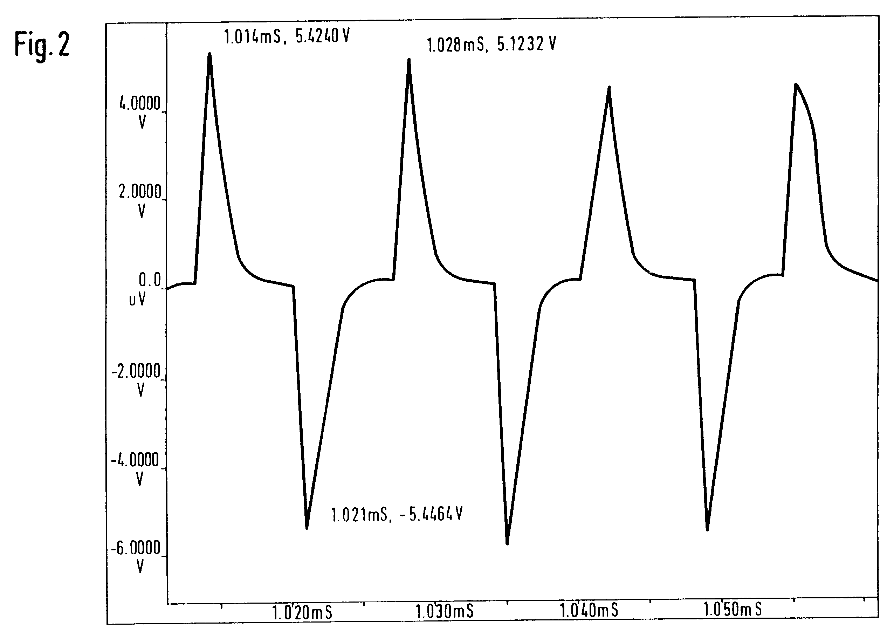

Im folgenden wird die Funktion des elektronischen Geräts beschrieben. Bei Inbetriebnahme des Fahrzeugs liegt über den Anschluß UBatt die Batteriespannung der Fahrzeugbatterie an der in der Figur dargestellten Schaltungsanordhung an und lädt über die Diode D1 den als Energiespeicher vorgesehenen Kondensator C1 auf. Der als mechanischer Beschleunigungsschalter ausgestaltete Sensor S100 verharrt bei üblichen Betriebsbedingungen des Fahrzeugs in der gezeichneten geöffneten Stellung, so daß insbesondere die astabile Kippstufe und auch die Entkoppelstufen nicht mit der Betriebsspannung verbunden sind. Erst wenn die Fahrzeugbeschleunigung einen vorgebbaren Grenzwert überschreitet, der beispielsweise zwischen etwa 4 g und 6 g, insbesondere bei etwa 5,6 g liegt, wird der Sensor S100 infolge der Beschleunigungseinwirkung in seine andere Schaltlage überführt, mit der Folge, daß nunmehr eine galvanische Verbindung, bzw. ein geschlossener Stromkreis hergestellt wird und demzufolge die Betriebsspannung UBatt auch an der astabilen Kippstufe und den beiden Entkoppelstufen anliegt. Daraufhin erzeugt die als Signalgenerator fungierende astabile Kippstufe nun an ihren beiden Ausgangsanschlüssen A1, A2 zwei gegenphasige Ausgangssignale, vorzugsweise in Gestalt von Rechtecksignalen, mit einer Frequenz, die einige 10 Kilohertz betragen kann. Die Frequenz dieser Ausgangssignale liegt etwa zwischen 50 Kilohertz und 90 Kilohertz, vorzugsweise bei etwa 70 Kilohertz. Die Schaltflanken der rechteckförmigen Ausgangssignale werden in den Entkoppelstufen mit den Schaltelementen T200 und T210 derart versteilert, daß die nachgeschalteten Endstufenschaltelemente T100, T101 nicht in ihrem aktiven Bereich betrieben und nicht gleichzeitig leitend werden. Mit diesen Rechtecksignalen wird die die Schaltelemente T100, T101 sowie die jeweils zugeordneten Widerstände R100, R101 und die Dioden D101, D100, D102 umfassende Endstufe gegenphasig angesteuert. Ausgangsseitig steuert, wie bereits erwähnt, diese Endstufe wiederum die diversen Zündelemente an. In Figur 2 ist das Impulsbild der an einem Zündelement mit einem Widerstandwert von ca. 2 Ohm anstehenden Spannung dargestellt. Aus dem Impulsbild wird ersichtlich, daß es sich dabei um ein bipolares Signal mit einer knapp unter +- 6 Volt liegenden Maximalamplitude handelt. Durch hinreichend häufige Beaufschlagung des jeweiligen Zündelementes mit dem in Figur 2 dargestellten Steuersignal wird ein hinreichend großer Stromfluß durch das Zündelement bewirkt, der dieses letztendlich aktiviert.

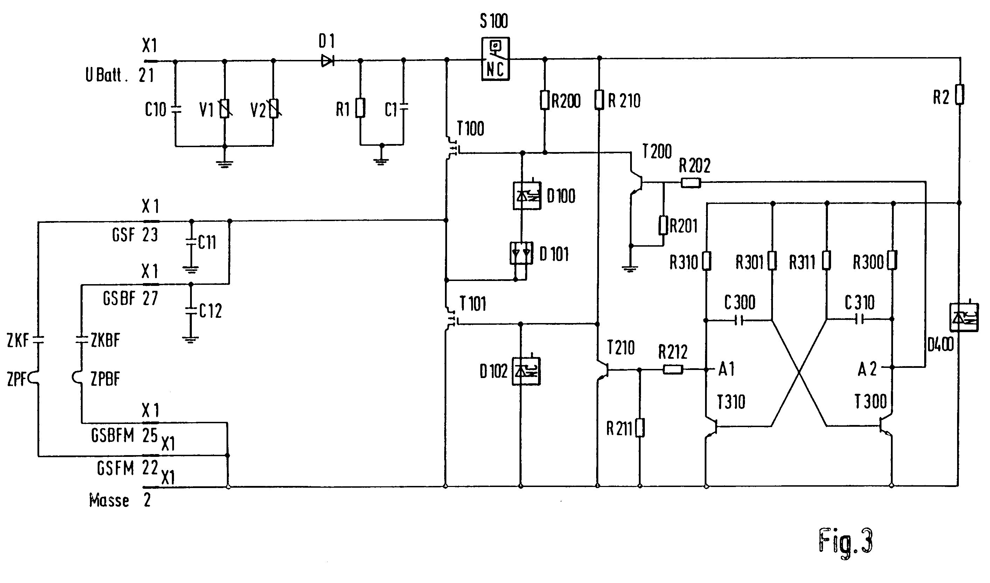

Ein zweites Ausführungsbeispiel des erfindungsgemäßen Gerätes ist in Figur 3 dargestellt. Es unterscheidet sich von dem in Figur 1 dargestellten Ausführungsbeispiel im wesentlichen nur dadurch, daß lediglich zwei Zündkreise vorgesehen sind, da das elektronische Gerät zur Auslösung von Gurtstraffern bestimmt ist. Demzufolge ist der eine Zündkreis mit GSF bezeichnet, was "Gurtstraffer Fahrer" bedeutet. Der zweite Zündkreis ist mit GSBF bezeichnet, was "Gurtstraffer Beifahrer" bedeutet. In beiden Zündkreisen GSF, GSBF ist je ein Zündelement angeordnet, das aus der Serienschaltung einer Zündpille ZPF bzw. ZBPF und eines Kondensators ZKF bzw. ZKBF besteht.

## Patentansprüche

1. Elektronisches Gerät, insbesondere Sicherheitseinrichtung für Fahrzeuginsassen, mit einem beschleunigungsempfindlichen Sensor und mit mindestens einem von einer Endstufe ansteuerbaren Zündelement, welches eine Zündpille und einen zu der Zündpille in Serie geschalteten Kondensator umfaßt, bei dem zwecks taktmäßiger Ansteuerung der Endstufe eine elektrische Schwingungen erzeugende Schaltung vorgesehen ist,
dadurch gekennzeichnet, daß die Endstufe (T100, T101) als Gegentaktendstufe ausgebildet ist und daß die Schwingungen erzeugende Schaltung als Signalgenerator in Form einer astabilen Kippstufe (C300, R301, R310, T300, C310, R300, R311, T310) ausgebildet ist,
daß die Ausgangsanschlüsse (A1, A2) der astabilen Kippstufe über Entkoppelstufen (T200, R202, R201, R200; T210, R212, R211, R210) mit den Steuerelektroden der Endstufenschaltelemente (T100, T101) verbunden sind, und
daß Schaltmittel (S100) vorgesehen sind, die die astabile Kippstufe und/oder die Entkoppelstufen in Abhängigkeit von der Fahrzeugbeschleunigung mit der Betriebsspannung verbinden.

2. Elektronisches Gerät nach Anspruch 1, dadurch gekennzeichnet, daß als Schaltmittel zur Verbindung der astabilen Kippstufe und/oder der Entkoppelstufen mit der Betriebsspannung ein beschleunigungsemfindlicher Sensor (S100) vorgesehen ist.

3. Elektronisches Gerät nach einem der Ansprüche 1 bis 2, dadurch gekennzeichnet, daß der elektronische Sensor (S100) ein mechanischer Beschleunigungsschalter ist, der bei einer vorgebbaren Beschleunigungsschwelle schaltet.

4. Elektronisches Gerät nach einem der Ansprüche 1 bis 3, dadurch gekennzeichnet, daß der Beschleunigungschalter (S100) bei einer zwischen etwa 4 g und 6 g, insbesondere bei etwa 5,6 g liegenden Beschleunigungsschwelle schaltet.

5. Elektronisches Gerät nach einem der Ansprüche 1 bis 4, dadurch gekennzeichnet, daß die astabile Kippstufe (C300, R301, R310, T300, C310, R300, R311, T310) derart bemessen ist, daß sie im wesentlichen Rechteckschwingungen mit einer Frequenz erzeugt, die zwischen etwa 50 Kilohertz und 90 Kilohertz, vorzugweise bei etwa 70 Kilohertz liegt.

## Claims

1. Electronic device, in particular safety device for vehicle occupants, having an acceleration-sensitive sensor and having at least one firing element which can be actuated by an output stage and which comprises a firing cap and a capacitor which is connected in series with the firing cap, in which firing element a circuit which generates electrical oscillations is provided in order to actuate the output stage in a clocked fashion, characterized in that the output stage (T100, T101) is designed as a push-pull output stage, and in that the circuit which generates oscillations is designed as a signal generator in the form of an astable flip-flop (C300, R301, R310, T300, C310, R300, R311, T310), in that the output terminals (A1, A2) of the astable flip-flop are connected to the control electrodes of the output stage switching elements (T100, T101) via decoupling stages (T200, R202, R201, R200; T210, R212, R211, R210), and in that switching means (S100) are provided which connect the astable flip-flop and/or the decoupling stages to the operating voltage as a function of the acceleration of the vehicle.

2. Electronic device according to Claim 1, characterized in that an acceleration-sensitive sensor (S100) is provided as switching means for connecting the astable flip-flop and/or the decoupling stages to the operating voltage.

3. Electronic device according to one of Claims 1 to 2, characterized in that the electronic sensor (S100) is a mechanical acceleration switch which switches at a predefinable acceleration threshold.

4. Electronic device according to one of Claims 1 to 3, characterized in that the acceleration switch (S100) switches at an acceleration threshold between approximately 4 g and 6 g, in particular at an acceleration threshold at about 5.6 g.

5. Electronic device according to one of Claims 1 to 4, characterized in that the astable flip-flop (C300, R301, R310, T300, C310, R300, R311, T310) is dimensioned in such a way that it essentially generates square-wave oscillations at a frequency which is between approximately 50 kilohertz and 90 kilohertz, preferably at approximately 70 kilohertz.

## Revendications

1. Appareil électronique, en particulier système de sécurité pour les passagers d'un véhicule, comprenant un détecteur sensible aux accélérations du véhicule et au moins un élément d'allumage qui peut être commandé par un étage final, élément d'allumage qui comprend une pastille d'allumage et un condensateur monté en série avec la pastille d'allumage, condensateur dans lequel pour commander de façon cyclique l'étage final on prévoit un circuit électrique qui produit des oscillations, caractérisé en ce que
• l'étage final (T 100, T 101) est constitué sous la forme d'un étage final symétrique et
• le circuit qui produit des oscillations est constitué sous la forme d'un générateur de signal ayant la forme d'un étage à bascule astable (C 300, R 301, R 310, T 300, C 310, R 300, R 311, T 310),
• les raccords de sortie (A1, A2) de l'étage à bascule astable sont reliés au moyen d'étages de découplage (T 200, R 202, R 201, R 200 ; T 210, R 212, R 211, R 210) aux électrodes de commande des éléments de commande des étages finaux (T 100 et T 101), et
• on prévoit des moyens de commande (S 100) qui relient l'étage à bascule astable et/ou les étages de découplage en fonction de l'accélération du véhicule à la tension de fonctionnement.

2. Appareil électronique selon la revendication 1,
caractérisé en ce qu'
on prévoit comme moyen de commande pour relier l'étage à bascule astable et/ou les étages de découplage à la tension de fonctionnement un détecteur (S 100) sensible à l'accélération.

3. Appareil électronique selon l'une des revendications 1 à 2,
caractérisé en ce que
le détecteur électronique (S 100) est un interrupteur mécanique commandé par accélération qui opère le branchement à un seuil d'accélération qui peut être défini au préalable.

4. Appareil électronique selon l'une des revendications 1 à 3,
caractérisé en ce que
l'interrupteur commandé par accélération (S 100) opère le branchement à un seuil d'accélération qui est compris entre 4 g et 6 g, en particulier à un seuil d'accélération se trouvant à environ 5,6 g.

5. Appareil électronique selon l'une des revendications 1 à 4,
caractérisé en ce que
l'étage à bascule astable (C 300, R 301, R 310, T 300, C 310, R 300, R 311, T 310) a une dimension telle qu'il produit des oscillations sensiblement rectangulaires à une fréquence qui est comprise entre environ 50 kilohertzs et 90 kilohertzs, et de préférence est égale à environ 70 kilohertzs.
